# EUROPÄISCHE PATENTSCHRIFT

(11) **EP 1 958 342 B1**
(45) Veröffentlichungstag und Bekanntmachung des Hinweises auf die Patenterteilung: **04.01.2012**
(21) Anmeldenummer: 06806353.6
(22) Anmeldetag: 18.10.2006
(51) Int. Cl.: H04B 3/54

(54) **ANLAGE**
SYSTEM
SYSTEME

(30) Priorität: 24.11.2005 DE 102005056295
(43) Veröffentlichungstag der Anmeldung: 20.08.2008
(73) Patentinhaber: SEW-EURODRIVE GmbH & Co. KG, 76646 Bruchsal (DE)
(72) Erfinder: SIMON, Olaf, 76646 Bruchsal (DE); SCHMIDT, Josef, 76676 Graben-Neudorf (DE); MAHLEIN, Jochen, 76139 Karlsruhe (DE)
(86) Internationale Anmeldenummer: PCT/EP2006/010032
(87) Internationale Veröffentlichungsnummer: WO 2007/059825

(56) Entgegenhaltungen:
- EP-A1- 0 171 302
- DE-A1- 10 014 183

## Beschreibung

Die Erfindung betrifft eine Anlage.

Es ist bekannt, in Anlagen Drehstromleitungen zu verlegen und Antriebe, wie Elektromotoren, zu versorgen aus einer Drehstromversorgung.

Aus der DE 100 14 183 A1 ist eine Anlage mit Antrieben bekannt, wobei der Antrieb über in der Anlage verlegte elektrische Leitungen mittels einer Steuereinheit mit-einer Versorgungsspannungsquelle verbindbar Ist und bei der zwischen Steuereinheit und Antrieb Informationen übertragbar sind unter Verwendung der Leitungen.

Der Erfindung liegt daher die Aufgabe zugrunde, eine Anlage mit üblicher Verkabelung weiterzubilden, wobei steuerbare Antriebe verwendbar sind.

Erfindungsgemäß wird die Aufgabe bei der Anlage nach den in Anspruch 1 angegebenen Merkmalen gelöst.

Wesentliche Merkmale der Erfindung bei der Anlage sind, dass sie einen Antrieb umfasst, der über in der Anlage verlegte elektrische Leitungen mittels einer Vorrichtung, insbesondere Steuereinheit, mit einer Versorgungsspannungsquelle verbindbar ist,
wobei zwischen Steuereinheit und Antrieb Informationen übertragbar sind unter Verwendung der Leitungen, insbesondere Energieversorgungsleitungen.

Von Vorteil ist dabei, dass die Verdrahtung bestehender Systeme erhalten bleibt und nur ein erfindungsgemäßer Antrieb eingesetzt werden muss sowie die Schütze ersetzt werden müssen. Die Vorrichtung ist derart ausführbar, dass sie elektronische Schalter umfasst. Somit entfallen elektromechanische Schalter, wie Relais, Schütz oder dergleichen. Die Standzeit ist also erhöht. Der Antrieb ist mechatronisch höherwertig ausbildbar, also umfassend einer Signalelektronik, die Informationen decodieren kann, welche von der Vorrichtung versandt werden über die Verkabelung. Der Antrieb ist auch derart ausführbar, dass er Leistungselektronik umfasst, die zur Beeinflussung der Drehrichtung des Elektromotors geeignet ausgeführt ist.

Als Antriebe sind insbesondere über leistungselektronische Komponenten steuerbare Antriebe verwendbar.

Bei einer vorteilhaften Ausgestaltung sind die Leitungen Drehstromleitungen. Von Vorteil ist dabei, dass die bei industriellen Anlagen übliche Verkabelung verwendbar ist.

Bei einer vorteilhaften Ausgestaltung ist während des Zeitintervalls, in weichen Information übertragen wird, der Antrieb nur mit zwei der drei Phasen versorgt. Von Vorteil ist dabei, dass die Signalelektronik versorgbar ist, wohingegen die Leistungselektronik nicht in vollem Umfang versorgbar ist. Solange also die Information noch nicht übertragen ist, kann der Antrieb keine ungewollte Leistungsabgabe ausführen,

Bei einer vorteilhaften Ausgestaltung ist die Information auf der dritten Phase übertragbar, wobei diese von der Vorrichtung zeitlich nacheinander in verschiedene Zustände versetzbar sind zur Codierung der Information. Von Vorteil ist dabei, dass ein störfreies sicheres Übertragen von Information auf einer Leistung ausführbar ist, die im sonstigen Betrieb der Leistungsübertragung zur Verfügung steht.

Bei einer vorteilhaften Ausgestaltung ist ein erster Zustand das Potential der ersten Phase, ein zweiter Zustand das Potential der zweiten Phase. Von Vorteil ist dabei, dass derartig eine sichere Übertragung von Information ausführbar ist.

Bei einer vorteilhaften Ausgestaltung ist ein dritter Zustand dadurch realisiert, dass die dritte Phase nicht verbunden oder auf ein von der ersten und zweiten Phase abhängiges Potential gelegt wird. Von Vorteil ist dabei, dass sogar drei verschiedene Zustände verwendbar sind. Bei einer vorteilhaften Ausgestaltung ist ein dritter Zustand, die dritte Phase derart auf ein von der ersten und zweiten Phase abhängiges Potential zu legen, dass dieses Potential dem arithmetischen Mittel der beiden anderen Potentiale gleicht. Von Vorteil ist dabei, dass die Erkerinbarkeit des Zustandes weiter verbessert ist.

Bei einer vorteilhaften Ausgestaltung ist als vierter Zustand mit der Vorrichtung die dritte Phase an die dritte Phase der Versorgungsspannung verbindbar. Von Vorteil ist dabei, dass der Antrieb am Versorgungsnetz direkt betreibbar ist.

Bei einer vorteilhaften Ausgestaltung umfasst der Antrieb eine Signalelektronik zum Empfangen und Decodieren der Information. Von Vorteil ist dabei, dass der antrieb intelligent und steuerbar ausführbar ist. Die Signalelektronik kann nicht nur die Informationen decodieren sondern auch entsprechende Steuersignale an die Leistungselektronik erzeugen, um die entsprechenden Aktionen zu bewirken, wie beispielsweise Drehrichtung, Aus- und Anschalten und gegebenenfalls Drehzahl-Einstellung.

Bei einer vorteilhaften Ausgestaltung umfasst der Antrieb eine elektronische Schaltung zum Umkehr des Drehsinns der dreiphasigen Versorgung. Von Vorteil ist dabei, dass die Schaltung mit Schützen oder elektronischen Leistungshalbleitern ausführbar ist

Bei einer vorteilhaften Ausgestaltung weist der Antrieb eine elektronische Schaltung zum Beeinflussen der Drehbewegung des Rotors des Elektromotors auf, insbesondere ist die Schaltung ein Motorschalter, Sanftanlauf oder Umrichter, wie Frequenzumrichter. Von Vorteil ist dabei, dass die Drehzahl und die Drehrichtung beeinflussbar ist.

Bei einer vorteilhaften Ausgestaltung wechseln während des Zeitintervalls, in welchem Information übertragen wird, die zwei der drei Phasen zur Versorgung des Antriebs und es wechselt ebenso die dritte Phase derart, dass stets die beiden anderen Phasen zur Versorgung der Signalelektronik des Antriebs vorgesehen sind und die dritte Phase zur Übertragung der Information vorgesehen ist. Von Vorteil ist dabei, dass die Schaltungen symmetrisch aufbaubar sind oder unabhängig von der Wahl der dritten Phase.

Weitere Vorteile ergeben sich aus den Unteransprüchen.

### Bezugszeichenliste

S Steuerung
M dreiphasig versorgbarer Antrieb
MM dreiphasig versorgbarer Antrieb
R Widerstand
1 Schütz für Rechtsdrehung
2 Schütz für Linksdrehung
3 Schalter
4 Steuersignal
5 Steuersignal
20 Vorrichtung

Die Erfindung wird nun anhand von Abbildungen näher erläutert:

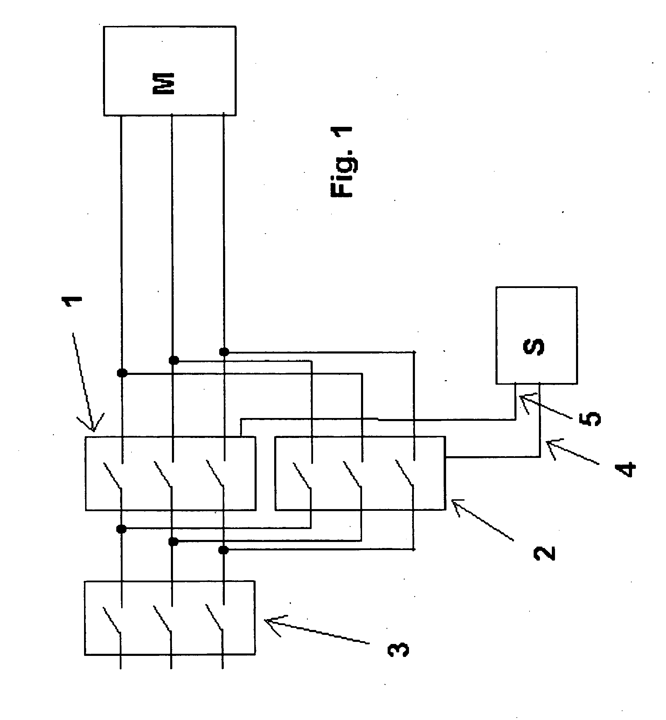

In der Figur 1 ist eine Art der Ansteuerung für einen Antrieb gezeigt.

Dabei ist der Antrieb M dreiphasig versorgbar. Die Versorgung wird über den Schalter 3 zugeschaltet oder abgeschaltet, wobei alle drei Phasen gleichzeitig geschaltet werden.

Von einer Steuerung S werden Steuersignale 4, 5 generiert, die beispielsweise 0 Volt oder 24 Volt aufweisen können. Dadurch wird Schütz 1 für Rechts- oder Schütz 2 für Linksdrehung angesteuert. Entweder der Schütz 1 oder der Schütz 2 wird betätigt. Davon abhängig ist der Drehsinn der den Antrieb versorgenden Leitungen vorgesehen und der Elektromotor des Antriebs dreht rechts herum oder links herum.

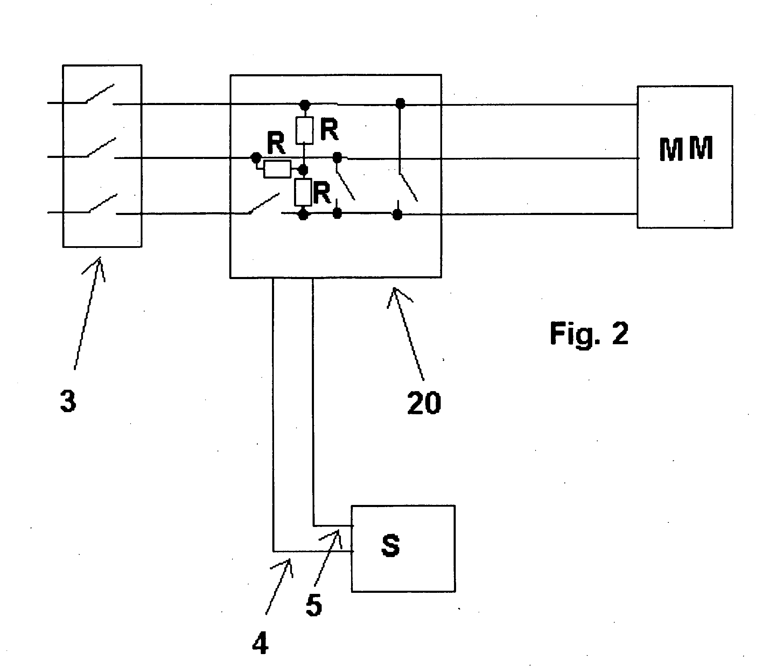

In Figur 2 ist eine erfindungsgemäße Ausführung gezeigt, bei der eine Vorrichtung 20 zwischen dem Antrieb und dem Schalter 3 vorgesehen ist. Diese Vorrichtung 20 weist dieselbe äußere Beschaltung auf, wie die beiden Schütze 1,2. Das heißt, dass zum Antrieb weiterhin drei Phasen geführt sind, zum Schalter 3 hin die drei versorgenden Phasen und zur Steuerung hin die beiden Steuersignalleitungen.

Allerdings weist nun der Antrieb MM eine Elektronik auf, die Informationen dekodieren und erkennen sowie verwalten kann. Dabei ist die Elektronik ebenfalls derart ausgeführt, dass eine Drehrichtungsumkehr beim Elektromotor bewirkbar ist. Insbesondere ist dies dadurch ausgeführt, dass der Drehsinn der drei Phasen umkehrbar ist von der Elektronik.

Nach Einschalten der Versorgung mittels des Schalters 3 wird in einem ersten Zeitintervall von der Vorrichtung 20 Informationen an den Antrieb gesendet. Dies erfolgt dadurch, dass nur zwei Phasen der Versorgung mit zwei Phasen des Antriebs verbunden werden und auf der dritten Phase Information übertragen wird. Die Signalelektronik des Antriebs ist in diesem Zeitintervall schon versorgbar aus den beiden verbundenen Phasen. Die Vorrichtung 20 hat für die Informationsübertragung nun drei Zustände zur Verfügung:

Der erste Zustand ist dabei, die Nicht-Verbindung der dritten Phase, also alle in Figur 2 gezeigten Schalter in offener Stellung.

Der zweite Zustand ist dabei, die Verbindung der dritten Phase mit der ersten Phase- Somit ist das Potential dieser beiden Phasen zum Antrieb hin gleich.

Der dritte Zustand ist dabei, die Verbindung der dritten Phase mit der ersten Phase. Somit ist das Potential dieser beiden Phasen zum Antrieb hin gleich.

In diesem ersten Zeitintervall, das beispielsweise kürzer ist als eine Sekunde und vorteiligerweise eine Dauer hat zwischen 1 und 200ms, wird also die von der Steuerung her vorliegende Information an den Antrieb gesendet, beispielsweise die Information, dass eine Rechtsdrehung des Antriebs erwünscht ist.

Nach diesem ersten Zeitintervall wird die dritte Phase des Antriebs mit der dritten Phase der Versorgungsspannung verbunden. Somit ist der Antrieb voll versorgt und kann nun die gewünschte Bewegung ausführen, beispielsweise rechtsdrehend.

Wenn nun nach einiger Zeit die Drehrichtung geändert werden soll, wird zunächst die Phase 3 vom Netz getrennt und anschließend wiederum ein zweites Zeitintervall entsprechend dem ersten eingefügt, in welchem entsprechende Informationen übertragbar sind und anschließend die Phase 3 wieder mit der Versorgungsspannung verbunden.

Vorteilhaft ist es darüber hinaus, mit den in Figur 2 gezeigten Widerständen R ein (oder mit weiteren Widerständen auch mehrere) definiertes Potential zu erzeugen und somit die Störsignale zu unterdrücken, weil dadurch der erste Zustand nun klar definiert ist von der Elektronik des Antriebs.

Bei weiteren erfindungsgemäßen Ausführungsbeispielen ist der Antrieb ein Umrichtermotor oder ein Getriebemotor oder ein Umrichtergetriebemotor. Alternativ ist der Antrieb als einfacher Elektromotor ausgeführt.

Bei weiteren erfindungsgemäßen Ausführungsbeispielen ist die Steuerung S mit Mitteln zur Eingabe der Information, wie Schalter, Drucktaster Schieber oder Drehknopf oder dergleichen versehen. Vorzugsweise ist somit ein Knopf für Rechtsdrehung und ein Knopf für Linksdrehung vorgesehen. Entsprechend werden Steuersignale erzeugt und codiert.

Bei anderen erfindungsgemäßen Ausführungsbeispielen ist die Steuerung S mit einem Bussystem verbunden, umfassend eine 24 Volt Versorgungsleitung. Die Steuersignale sind also erzeugbar und codierbar durch eine übergeordnete Steuerung.

Die Vorrichtung 20 ist also nach Art einer elektronischen Steuereinheit aufgebaut.

Bei anderen erfindungsgemäßen Ausführungsbeispielen ist statt der Drehstromleitung eine einphasige Versorgungsleitung verwendet. Dabei funktioniert die Informationsübertragung durch wechselweises Verbinden eines der beiden Versorgungsdrähte des Antriebs mit der anderen oder mit Erdanschluss.

## Patentansprüche

1. Anlage, umfassend einen Antrieb, der über in der Anlage verlegte elektrische Leitungen mittels einer Vorrichtung, insbesondere Steuereinheit, mit einer Versorgungsspannungsquelle verbindbar ist, und
zwischen Steuereinheit und Antrieb Informationen übertragbar sind unter Verwendung der Leitungen,
wobei die Leitungen Drehstromleltungen sind,
**dadurch gekennzeichnet, dass**
während des Zeitintervalls, in welchem Information übertragen wird, der Antrieb nur mit zwei der drei Phasen versorgt ist.

2. Anlage nach mindestens einem der vorangegangenen Ansprüche,
**dadurch gekennzeichnet, dass**
die Information auf der dritten Phase übertragbar ist, wobei diese von der Vorrichtung zeitlich nacheinander in verschiedene Zustände versetzbar sind zur Codierung der Information.

3. Anlage nach mindestens einem der vorangegangenen Ansprüche,
**dadurch gekennzeichnet, dass**
ein erster Zustand das Potential der ersten Phase ist,
ein zweiter Zustand das Potential der zweiten Phase ist,

4. Anlage nach mindestens einem der vorangegangenen Ansprüche,
**dadurch gekennzeichnet, dass**
ein dritter Zustand ist, die dritte Phase nicht zu verbinden oder auf ein von der ersten und zweiten Phase abhängiges Potential zu legen.

5. Anlage nach mindestens einem der vorangegangenen Ansprüche,
**dadurch gekennzeichnet, dass**
ein dritter Zustand ist, die dritte Phase derart auf ein von der ersten und zweiten Phase abhängiges Potential gelegt ist, dass dieses Potential dem arithmetischen Mittel der beiden anderen Potentiale gleicht.

6. Anlage nach mindestens einem der vorangegangenen Ansprüche,
**dadurch gekennzeichnet, dass**
als vierter Zustand mit der Vorrichtung die dritte Phase an die dritte Phase der Versorgungsspannung verbindbar ist.

7. Anlage nach mindestens einem der vorangegangenen Ansprüche,
**dadurch gekennzeichnet, dass**
der Antrieb eine Signalelektronik zum Empfangen und Decodieren der Information umfasst.

8. Anlage nach mindestens einem der vorangegangenen Ansprüche,
**dadurch gekennzeichnet, dass**
der Antrieb eine elektronische Schaltung zum Umkehr des Drehsinns der dreiphasigen Versorgung umfasst.

9. Anlage nach mindestens einem der vorangegangenen Ansprüche,
**dadurch gekennzeichnet, dass**
der Antrieb eine elektronische Schaltung zum Beeinflussen der Drehbewegung des Rotors des Elektromotors aufweist, insbesondere ist die Schaltung ein Motorschalter, Sanftanlauf oder Umrichter umfasst.

10. Anlage nach mindestens einem der vorangegangenen Ansprüche,
**dadurch gekennzeichnet, dass**
während des Zeitintervalls, in welchem Information übertragen wird, die zwei der drei Phasen zur Versorgung des Antriebs wechseln und ebenso die dritte Phase derart wechselt, dass stets die beiden anderen Phasen zur Versorgung der Signalelektronik des Antriebs vorgesehen sind und die dritte Phase zur Übertragung der Information vorgesehen ist.

## Claims

1. A system,
comprising a drive which can be connected, via electric lines arranged in the system, by means of a device, in particular control unit, to a supply voltage source, and
information can be transmitted between the control unit and drive using the lines,
the lines being three-phase lines,
**characterised in that**,
during the time interval in which information is transmitted, the drive is supplied only with two of the three phases.

2. A system according to at least one of the preceding claims, **characterised in that** the information can be transmitted on the third phase, this being able to be transferred by the device into different states in chronological succession for coding the information.

3. A system according to at least one of the preceding claims, **characterised in that** a first state is the voltage of the first phase,
a second state is the voltage of the second phase.

4. A system according to at least one of the preceding claims, **characterised in that** a third state is not connecting the third phrase or connecting it to a voltage dependent on the first and second phase.

5. A system according to at least one of the preceding claims, **characterised in that** a third state is [that] the third phase is connected to a voltage dependent on the first and second phase such that this voltage is equal to the arithmetic mean of the other two voltages.

6. A system according to at least one of the preceding claims, **characterised in that** as fourth state the third phase can be connected to the third phase of the supply voltage with the device.

7. A system according to at least one of the preceding claims, **characterised in that** the drive comprises signalling electronics for receiving and decoding the information.

8. A system according to at least one of the preceding claims, **characterised in that** the drive comprises an electronic circuit for reversing the direction of rotation of the three-phase supply.

9. A system according to at least one of the preceding claims, **characterised in that** the drive has an electronic circuit for influencing the rotary motion of the rotor of the electric motor, in particular the circuit is a motor switch, soft-start means or converter.

10. A system according to at least one of the preceding claims, **characterised in that**, during the time interval in which information is transmitted, the two of the three phases for supplying the drive change, and likewise the third phase changes such that always the other two phases are provided for supplying the signalling electronics of the drive and the third phase is provided for transmitting the information.

## Revendications

1. Système,
comprenant un entraînement qui peut être relié à une source de tension d'alimentation par des lignes électriques posées dans le système, par l'intermédiaire d'un dispositif, en particulier d'une unité de commande, et
dans lequel des informations peuvent être transmises entre unité de commande et entraînement en utilisant les lignes,
les lignes étant des lignes de courant triphasé,
**caractérisé en ce**
**que** l'entraînement est alimenté par seulement deux des trois phases pendant l'intervalle de temps dans lequel des informations sont transmises.

2. Système selon au moins une des revendications précédentes,
**caractérisé en ce**
**que** l'information peut être transmise sur la troisième phase, celle-ci pouvant être mise dans différents états successivement dans le temps par le dispositif aux fins de codage de l'information.

3. Système selon au moins une des revendications précédentes,
**caractérisé en ce**
**qu'**un premier état est le potentiel de la première phase,
un deuxième état est le potentiel de la deuxième phase.

4. Système selon au moins une des revendications précédentes,
**caractérisé en ce**
**qu'**un troisième état consiste à ne pas relier la troisième phase ou à la mettre à un potentiel dépendant de la première et de la deuxième phase.

5. Système selon au moins une des revendications précédentes,
**caractérisé en ce**
**qu'**un troisième état consiste en ce que la troisième phase est mise à un potentiel dépendant de la première et de la deuxième phase de telle façon que ce potentiel soit égal à la moyenne arithmétique des deux autres potentiels.

6. Système selon au moins une des revendications précédentes,
**caractérisé en ce**
**qu'**en tant que quatrième état, la troisième phase peut être reliée par le dispositif à la troisième phase de la tension d'alimentation.

7. Système selon au moins une des revendications précédentes,
**caractérisé en ce**
**que** l'entraînement comprend une électronique de signalisation pour recevoir et décoder l'information.

8. Système selon au moins une des revendications précédentes,
**caractérisé en ce**
**que** l'entraînement comprend un circuit électronique pour inverser le sens de rotation de l'alimentation triphasée.

9. Système selon au moins une des revendications précédentes,
**caractérisé en ce**
**que** l'entraînement comprend un circuit électronique pour influencer le mouvement de rotation du rotor du moteur électrique, le circuit étant en particulier un interrupteur de moteur, un démarrage progressif ou un variateur de vitesse.

10. Système selon au moins une des revendications précédentes,
**caractérisé en ce**
**que** pendant l'intervalle de temps dans lequel l'information est transmise, les deux des trois phases utilisées pour alimenter l'entraînement changent et, de même, la troisième phase change de telle façon que les deux autres phases soient toujours prévues pour alimenter l'électronique de signalisation de l'entraînement et la troisième phase pour transmettre l'information.
